# EUROPEAN PATENT APPLICATION

(11) **EP 1 997 849 A1**
(43) Date of publication of application: **03.12.2008**
(21) Application number: 07075407.2
(22) Date of filing: 30.05.2007
(51) Int. Cl.: C08J 9/00

(54) **Fire retardant polystyrene**

(71) Applicant: Nova Innovene International S.A., 1700 Fribourg (CH); CRH Plc, Clondalkin, Dublin 22 (IE)
(72) Inventor: The designation of the inventor has not yet been filed
(74) Representative: Preece, Michael

(57) **Abstract**

A composition comprising :
(i) expanded or expandable polystyrene beads or particles
(ii) an intumescent, and
(iii) a fire-resistant binder
is disclosed.

The fire-resistant binder is an inorganic material chosen from the list comprising metal, silicates, metal aluminates, metal aluminosilicates and zeolites preferably an aqueous solution of sodium silicate.

A method of preparing a fire-retardant polystyrene is also disclosed.

## Description

This invention relates to fire retardant polystyrene, in particular fire retardant polystyrene foams.

Polystyrene foams provide a favourable combination of properties for the purpose of building and construction of dwellings, for example;
- very low water permeability
- very high water resistance
- very good thermal insulation value, constant over the product lifespan (40 years plus)
- excellent sound insulation
- high constructive strength at minimal weight or density

Polystyrene is an intrinsically combustible material, and good fire retardancy for polystyrene foams is generally achieved by the use of specific fire-retardant additives to the polymer, or by a combination of the polystyrene foam parts with other constructive materials. In these product types and combinations, polystyrene foams have achieved a well-earned reputation as safe and very efficient construction/insulation materials.

In recent years, there has been an emerging need for increased fire retardant properties of base materials in building and construction, particularly measures to avoid the loss of property as a result of fire. An important requirement for this is that a construction material retains a structural integrity for a long period in a fire, maximizing the chance to salvage building and goods from being lost in the fire. Typically, the insurance fire tests (eg as defined by the LPC Design Guide for the Fire Protection of Buildings, Appendix B, LPS 1181: Part 1)) are more stringent than those applied by the national and European legislation (Small flame test, Single Burning item, etc.), especially on exposing for a longer time to fire conditions. Standard fire-retardant polystyrene foam generally as such does not pass the severest of these tests.

Therefore, there remains a strong need for a polystyrene foam product which has the unique combination of beneficial properties as indicated above, in combination with a dramatically increased retention of structural stability when exposed to fire.

There are a great many examples of construction products with very strong fire retardance, in which polystyrene foam is integrated with other materials like wood, metal, mineral wool, polyisocyanurate, polyphenol. In these applications, the polystyrene foam can be virgin, or be prepared with a so-called fire retardant additive. Most common examples of fire-retardant additives for polystyrene foam are organohalogen compounds like hexabromocyclododecane, derivatives of tetrabromobisphenol A tribromophenyl allylether. These examples have in common that the first stage reaction of the product to fire is very well managed (by, for example, lamination with a poorly combustible material). However, at higher temperatures in a continuing fire situation (200-300 °C) the polystyrene on the inside of the product will melt. This results in the collapse of the foam structure and possibly of the overall product structure. In addition, if roof constructions are not well prepared, droplets of burning polystyrene can escape from the construction.

Another approach to increasing the fire retardancy of polystyrene foams has been to change the intrinsic fire-, and temperature behaviour of the polystyrene foam itself. For solid, non-foamed polystyrene, the literature is plentiful with examples to this extent: so-called charring and intumescent packages are added to solid polystyrene to change the burning behaviour dramatically ( Georlette, P., Simons, J., Costa, L. in "Fire retardancy of polymeric materials", Grand & Wilkie, Eds, Marcel Dekker, New York, 2000, p. 245-283). For polystyrene foams, however, this has been much more difficult. EP 834529, for example, teaches the addition of phosphorous-containing organic materials and magnesium for improving the fire-retardant behaviour of PS foam. However, the fire behaviour was only minimally improved at a very high loading of fire retardant. Generally, the attempts to alter the burning behaviour of PS foam by adding so-called charring and intumescent agents to the resin or the polymerization have suffered from this problem.

As a third approach, polystyrene foam, in the shape of expanded polystyrene foam beads, is mixed with a polyphenol resin and compressed into foam sheets with excellent fire retardancy. However, these materials have lost much of the initial performance requirements of polystyrene foams, for example they are notably more brittle and the water absorption has increased In addition, the preparation of the product requires dedicated machinery not present in the standard foam producer's workplace.

Finally, there are incidental examples where fire retardancy has been added to the polystyrene foam by treating so-called EPS (Expandable polystyrene) beads with either an intumescent package or clay/silicate resins like waterglass. While these materials again show increased fire retardant performance, and have the benefit that their application processes are compatible with current state-of-the-art, the typical loading of fire retardant material was such that much of the intrinsic PS foam performance (as highlighted above) was lost in the new product.

We have now found that these problems can be overcome by using a combination of a fire-resistant binder with intumescent additive. This additive package can provide a dramatically improved and synergistic fire retardant behaviour, while maintaining the excellent performance characteristics of polystyrene foam.
The present invention provides a composition comprising
(i) expanded or expandable polystyrene beads or particles
(ii) an intumescent and
(iii) a fire-resistant binder

According to a further embodiment of the present invention there is provided a method of preparing fire retardant polystyrene comprising a first step of coating expanded polystyrene beads with a fire-resistant binder and an intumescent and optionally the following steps
(a) drying the beads
(b) transferring the dried beads to a mould
(c) compressing and moulding the beads at elevated temperature.

In a further embodiment there is provided expanded or expandable polystyrene in bead or particular form wherein the particles or beads are coated with an intumescent and a fire-resistant binder. The expanded or expandable polystyrene can be rework, recycle or scrap material provided that it is in particulate form.
In the above definition, fire-resistant binder is understood to be a liquid or a paste capable of i) carrying and distributing the intumescent homogeneously over the foamed bead surface, ii) helps to adhere the intumescent to the bead surface and iii) produces a residue of non-combustible material upon heating by fire. The fire-resistant binder can be for example a metal silicate or metal aluminosilicate or a zeolite .The fire-resistant binder can be organic or inorganic. Preferred are inorganic binders based on silicate and water, where silicate is understood to be any of numerous compounds containing silicon, oxygen, and one or more metals. Generally, silicates consist of SiO₂ or SiO₄ groupings combined with one or more metals and sometimes hydrogen, with the addition of ions such as aluminium, maganesium, calcium, sodium, or other metals. According to the combination ratio Na₂O/SiO₂, they can be divided into various products. For example, liquid sodium silicate, called water glass, is a viscous alkaline and transparent solution in which the SiO₂ to Na₂O ratio varies. Also well known are the zeolites, hydrated aluminium silicates of calcium sodium or potassium. When based on calcium as additional salt source, binders can even be cement, lime or gypsum. Particularly preferred are alkali metal silicates for example sodium or potassium silicate preferably sodium silicate. Organic binders can for example consist of mixtures of phenolic resins and water, polyurethane dispersions, or melamine-based liquid mixtures.As an example, a mixture of sodium silicate and water can function as a fire-resistant binder , but also eg mixtures of water and zeolites, phenol derivatives (e.g. polyphenols, phenol-formaldehyde resins) or char-forming salts (eg as disclosed in GB 2101644).

The fire-resistant binder can also be in the form of a gel or a sol-gel particularly when the binder is a silicate or zeolite. A gel is a colloidal suspension in which a porous skeleton encloses a liquid phase. The fire-resistant binder may be applied as a gel-forming composition comprising a silicate or aluminosilicate which may optionally also comprise an organic liquid in particular an organic liquid that is water-immiscible. The gel-forming composition can be formed *in situ* by adding a metal silicate with a metal aluminate preferably in water.

An intumescent in the above definition represents a composition which, upon heating or exposure to fire, produces a foamed char layer many times its original volume. Examples include ammonium polyphosphate/pentaerythritol mixtures, melamine, guanidines, chloroparaffins, phosphines, phosphonates, resin binders and expandable graphite, preferably expandable graphite.

The combination of the above binder with an intumescent additive is thought to be complementary in nature
It is a feature of the current invention, that the total loading of fire-resistant binder and intumescent does not compromise the final foam mechanical and thermal performance properties. This is in contrast to earlier disclosures, where binders like silicates or waterglass have been used as single additive to achieve increased fire resistance for foamed polymers (eg US 6,545,078 B1, 2003; WO 2006/121259; WO 2007/012832 A2,). In these cases, the required loading to achieve even moderate fire resistance is too high to be of practical use. Likewise, intumescent packages have been introduced into foamed polymer products, but also here the required loading is too high for practical use. NL1026339 for example teaches the concentration of expandable graphite to the upper layer of a foamed plate (by the expensive process of post mold-application) in order to achieve acceptable fire behaviour.

The expanded polystyrene beads are formed typically by heat treatment of expandable polystyrene (e.g. as described in "Modern Styrenics Polymers, Scheirs & Priddy, eds. Wiley, New York 2003). Expandable polystyrene is understood to be a composition which comprises a blowing agent and which is capable of expansion by virtue of the presence of the blowing agent. The composition may be in the form of particles or, preferably, of expandable beads. By beads are meant, generally, spherical or substantially spherical particles, in particular spheroidal particles which may have a large diameter and a small diameter, with a ratio between the large diameter and the small diameter ranging in particular from 1.0 to 1.3, preferably from 1.0 to 1.2. The expandable particles or beads may have an average size ranging from 0.3 to 3 mm, preferably from 0.3 to 2 mm, in particular from 0.4 to 1.5 mm. They may also have a bulk density (or apparent density), measured according to method ASTM D 1622, ranging from 550 to 720 kg/m³, preferably from 580 to 710 kg/m³, in particular from 600 to 770 kg/m³.

The expandable polystyrene composition comprises a styrene polymer, which may be a homopolymer or a copolymer of styrene, containing at least 50%, preferably at least 80% and in particular at least 90% by weight of styrene. The comonomer or comonomers present in the styrene copolymer may be selected from vinylaromatic compounds, in particular from alpha-methylstyrene, a styrene halogenated on the aromatic ring or a styrene alkylated on the aromatic ring, (meth)acrylic acid, C₁ to C₄ alkyl esters of (meth)acrylic acid such a methyl acrylate, methyl methacrylate, ethyl acrylate, ethyl methacrylate, isopropyl acrylate or butyl acrylate, amides and nitriles of (meth)acrylic acid such as acrylamide, methacrylamide, acrylonitrile or methacrylonitrile, butadiene, ethylene, divinylbenzene and maleic anhydride. The expandable polystyrene composition can also be a blend of polystyrene and polyolefins polymers (e.g. ARCEL commercially available from NOVA Chemicals). Further, the expandable polystyrene beads used can also have material/additive incorporated such as metal oxides, metal powder, carbon black, graphite, etc that improve the thermal insulation properties (e.g. EPS Silver, Neopor and Lambdapor polymers) of the final foam.. Preference is given to using a homopolystyrene. The weight-average molecular mass, Mw, of the styrene polymer may be in a range extending from 150 000 to 450 000 daltons, preferably from 160 000 to 400 000 daltons, in particular from 170 000 to 300 000 daltons. The distribution of the molecular masses of the styrene polymer, calculated by the ratio between Mw and the number-average molecular mass Mn of the polymer, may range from 1.5 to 4.0, preferably from 1.7 to 3.5, in particular from 1.8 to 3.0. The polystyrene may advantageously have a relatively low level of residual monomer and, where appropriate, of residual comonomer(s), despite the presence of the carbon black, which is known to be a polymerization inhibitor: for example, the amount may be less than or equal to 2000 parts by weight per million (ppm), preferably equal to or less than 1000 ppm. The expandable polystyrene composition comprises, per 100 parts by weight of styrene polymer, from 2 to 20 parts, preferably from 3 to 15 parts and in particular from 3 to 10 parts by weight of at least one blowing agent. The blowing agent may be selected from aliphatic or cyclic, optionally fluorinated, hydrocarbons, carbon dioxide, water and mixtures of two or more of these compounds. More particularly it may be selected from Freons, linear or branched saturated hydrocarbons and cyclic saturated hydrocarbons, preferably C₃ to C₇ hydrocarbons, in particular C₄ to C₆ hydrocarbons, such as n-butane, isobutane, n-pentane, isopentane, n-hexane or isohexane, carbon dioxide, water and mixtures of two or more of these compounds, especially mixtures of two or more of these hydrocarbons, mixtures of carbon dioxide with water, mixtures of carbon dioxide with at least one of these hydrocarbons, or mixtures of water with at least one of these hydrocarbons and, optionally, carbon dioxide.

Although this invention is in essence designed for non-flame-retardant EPS products, the expandable polystyrene composition may further comprise at least one additive selected from flame retardants, nucleating agents, plasticizers and agents which facilitate the demoulding of the moulded and expanded articles. In particular it may comprise at least one flame retardant selected in particular from halogenated hydrocarbons, preferably brominated hydrocarbons, in particular C₆ to C₁₂ hydrocarbons, such as hexabromocyclohexane, pentabromomonochlorocyclohexane or hexabromocyclododecane, in an amount which can range from 0.05 to 2 parts, preferably from 0.1 to 1.5 parts, by weight, per 100 parts by weight of the styrene polymer. The composition may further comprise at least one nucleating agent selected in particular from synthetic waxes, in particular Fischer-Tropsch waxes and polyolefin waxes such as polyethylene waxes or polypropylene waxes, in an amount which can range from 0.05 to 1 part, preferably from 0.1 to 0.5 part, by weight per 100 parts by weight of the styrene polymer. The composition may likewise comprise at least one plasticizer, selected in particular from mineral oils and petroleum waxes such as paraffin waxes, in an amount that can range from 0.1 to 1 part, preferably from 0.1 to 0.8 part, by weight per 100 parts by weight of the styrene polymer. The composition may additionally comprise at least one agent which facilitates the demoulding of the moulded and expanded articles, selected in particular from inorganic salts and esters of stearic acid, such as glycerol mono-, di- or tristearates and zinc stearate, calcium stearate or magnesium stearate, in an amount which can range from 0.05 to 1 part, preferably from 0.1 to 0.6 part, by weight per 100 parts by weight of the styrene polymer.

The process for preparing the expandable polystyrene composition which is in the form, in particular, of expandable particles or, preferably, expandable beads comprises a step of polymerizing styrene and optionally at least one comonomer as mentioned above in aqueous suspension, followed by a step of separating off and eliminating the aqueous phase, and isolating the composition in particular in the form of expandable particles or beads. The polymerization in aqueous suspension may be carried out with stirring, in the presence of at least one free-radical polymerization initiator, at least one suspension stabilizer, blowing agent or agents, the blowing agent(s) being present in an amount which can range from 3 to 20, preferably 5-10 by weight parts by weight per 100 parts by weight of styrene

Polymerization in aqueous suspension may be carried out at a temperature ranging from 70 to 150°C, preferably from 85 to 140°C. It may be carried out with a weight ratio between the water and the styrene and optionally the comonomer(s) ranging from 0.8/1 to 5/1, preferably from 0.9/1 to 4/1. The polymerization may be continued for a time such that the amount of residual monomer and, where appropriate, of residual comonomer(s) is less than or equal to 2000 ppm, preferably less than or equal to 1000 ppm..

Polymerization in aqueous suspension is carried out in the presence of one or more free-radical polymerization initiators, in an amount which can range from 0.01 to 2 parts, preferably from 0.05 to 1 part by weight, per 100 parts by weight of monomer and optionally of comonomer(s). The free-radical polymerization initiator may be selected from mono-, di- and polyfunctional free-radical initiators, and in particular from peroxides, hydroperoxides, peroxycarbonates, perketals, peresters and azo compounds. It is preferably selected from difunctional or polyfunctional free-radical initiators and more particularly from peresters. It has been found particularly advantageous to carry out the polymerization in the presence of at least one free-radical polymerization initiator selected from cumylhydroperoxide, peresters, such as tert-butyl peroxy-2-ethylhexanoate, tert-butyl peroxyneodecanoate, tert-butyl peroxypivalate, tert-butyl peroxydiethylacetate, tert-butyl peroxyisobutyrate, tert-butyl peroxy-3,5,5-trimethylhexanoate, cumyl peroxyneodecanoate, tert-amyl peroxy-2-ethylhexanoate, tert-amyl peroxyneodecanoate, tert-amyl peroxypivalate, 2,5-bis(2-ethylhexanoylperoxy)-2,5-dimethylhexane or 2,4,4-trimethylpentyl-2-peroxyneodecanoate, or else from difunctional or polyfunctional free-radical initiators, such as 1,1-bis(tert-butylperoxy)-3,3,5-trimethylcyclohexane, 1,1-bis(tert-butylperoxy)cyclohexane, 2,5-bis(tert-butylperoxy)2,5-dimethylhexane, 2,2-bis(tert-butylperoxy)butane or bis(tert-butylperoxyisopropyl)benzene. In effect, these initiators make it possible to improve the yield of the polymerization reaction in spite of the presence of the carbon black. It is possible, accordingly, to manufacture the polystyrene containing a very low amount of residual styrene and, where appropriate, of residual comonomer(s). The free-radical polymerization initiator or initiators may be introduced in its or their entirety at the beginning of polymerization or else part at the beginning and the remaining part in one or more portions during the polymerization.

Polymerization in aqueous suspension is preferably carried out in the presence of at least one suspension stabilizer, in particular at least one organic suspension stabilizer, selected in particular from polyvinyl alcohols, hydroxyethylcellulose, methylcellulose, sodium dodecylbenzenesulphonate, random copolymer of acrylic acid and ethylhexylacrylate starch, polyacrylamides and polyvinylpyrrolidones, or at least one inorganic suspension stabilizer, selected in particular from alumina, magnesium silicate, magnesium oxide, zinc oxide, calcium carbonate, calcium fluoride and inorganic salts of (pyro)phosphoric acid such as tricalcium phosphate, barium phosphate, aluminium phosphate or magnesium pyrophosphate. The amount of suspension stabilizer employed may be from 0.05 to 6 parts, preferably from 0.1 to 4 parts, by weight per 100 parts by weight of styrene and optionally of comonomer(s).

In order to improve the stability of the suspension it is also possible to carry out the polymerization in the presence of a styrene (pre)polymer different from or, preferably, identical to the polymer of the composition, in an amount which can range from 1 to 50 parts, preferably from 30 to 45 parts, by weight per 100 parts by weight of total employed. Thus it is possible, before beginning the polymerization, to form a solution, by addition and dissolution of the (pre)polymer of styrene in the monomer or, where appropriate, the comonomer(s). Thus it is possible to carry out prepolymerization in bulk or in a solution of styrene and, where appropriate, of one or more comonomers, until the abovementioned proportion of (pre)polymer is attained, and then to continue the polymerization in aqueous suspension in the presence in particular of the aforementioned reactants and additives.

Polymerization in aqueous suspension may be carried out in the presence of other additives, selected from chain transfer agents such as mercaptans and the dimers of alpha-methylstyrene, flame retardants such as halogenated hydrocarbons, preferably brominated hydrocarbons, in particular those mentioned above, crosslinking agents such as butadiene or divinylbenzene, plasticizers and nucleating agents, especially those mentioned above.

Polymerization in aqueous suspension is carried out in particular in the presence of at least one blowing agent, in an amount ranging from 3 to 23 parts, preferably from 4 to 17 parts, in particular from 4 to 12 parts by weight, per 100 parts by weight of styrene and optionally of comonomer(s) employed in the polymerization. Generally, a small portion of the blowing agent employed during the polymerization is lost and is not recovered in the expandable polystyrene composition after the polymerization. The blowing agent or agents may be selected from those mentioned above and may be introduced in their entirety at the beginning or during the polymerization, or else partly at the beginning and the remaining part in one or more portions during the polymerization. They may alternatively be introduced in a separate impregnation step.

The expandable polystyrene composition is used for producing an expanded article, in particular an extruded or moulded article, having in particular a bulk density (or apparent density), measured according to method ASTM D 1622, ranging from 5 to 200 kg/m³, preferably from 5 to 180 kg/m³ and in particular from 5 to 150 kg/m³. The expanded polystyrene is typically produced by a process comprising the following steps:
(i) a step of pre-expansion (or prefoaming) by contacting and mixing the composition, in particular in the form of expandable particles or expandable beads, with steam, in particular in a stirred tank and in particular under pressure and temperature conditions capable of forming expanded particles or beads having in particular a bulk density (or apparent density) ranging from 5 to 200 kg/m³, preferably from 5 to 100 kg/m³ and in particular from 5 to 50 or to 30 kg/m³, for example at a temperature ranging from 80 to 110°C, or from 85 to 105°C, and under an absolute pressure which can range from 10 to 160 kPa, or from 50 to 150 kPa, and
(ii) optionally, a step of stabilising the particles or beads (maturation) thus expanded, by contacting them with ambient air, in particular at a temperature ranging from 0 to 40°C, and under an absolute pressure which can range from 50 to 130 kPa, preferably from 80 to 120 kPa, for a time which can range from a few hours to a few days, for example from4 hours to 3 days, such as in particular to attain an equilibrium between the ambient air and the internal atmosphere of the expanded particles or beads.

The expanded polystyrene beads are mixed with the fire-resistant binder and the intumescent; it is important to achieve good distribution of both with the beads. The intumescent and fire-resistant binder can be added separately or as a mixture. The mixing process can be carried out at a temperature in the range 0°-100°C preferably, 10° - 75°C, more preferably, most preferably at ambient temperature. The beads are then dried, and optionally moulded.

Accordingly the invention relates to the use of the expandable polystyrene composition, in the form in particular of expandable particles or, preferably expandable beads, and expanded particles and expanded beads produced therefrom for producing a moulded and expanded article having a bulk density (or apparent density) as mentioned above, for example ranging from 5 to 200 kg/m³, preferably from 5 to 100 kg/m³, in particular from 5 to 50 kg/m³, and especially from 5 to 30 kg/m³.

Moulding the particles or beads of expanded polystyrene is typically carried out, by introducing them into a mould and by heating the mould, in particular so as to weld the particles or beads to one another, for example at a temperature ranging from 80 to 120°C, and so to produce a moulded and expanded article having in particular the desired bulk density (or apparent density) which, preferably, is substantially identical to that of the pre-expanded particles or beads. expanded particles or beads.

The fire-resistant binder is preferably used in solution preferably aqueous solution. Other solvents or carriers for the fire-resistant binder can be used. When the fire-resistant binder is applied as a solution, for example an aqueous solution, the concentration of the fire-resistant binder in the solution is in the range 2-80% by weight, preferably 10-70% more preferably 15-50% by weight.

The intumescent can be any substance that swells as a result of heat exposure, increasing in volume and decreasing in density. An intumescent is typically used in passive fire protection and is typically endothermic and can contain chemically bound water. Typical examples of intumescents are expandable graphite, nanoclays, expandable glass beads (e.g.Expancell commercially available from Akzo)] preferably expandable graphite. The amount of intumescent applied to the polystyrene is in the range 2-80% preferably 2-50, more preferably 2-25% of the weight of the polystyrene.

Typically the intumescent and fire-resistant binder will be applied to the expandable or preferable expanded polystyrene prior to moulding. However the fire-resistant binder and intumescent can be applied to an already moulded polystyrene foam article, block or sheet by impregnation; in this case the fire-resistant binder and intumescent can be made to permeate the article, block or sheet by, for example placing it in a container (e.g. a bag) through which a liquid solution or slurry of fire-resistant binder and intumescent is allowed to pass by gravity or pumping action.

The present invention further comprises an article comprising polystyrene foam treated with a fire-resistant binder and an intumescent and optionally a material normally used for construction purposes such as gypsum, iron board, aluminium or some other metallic material

The invention will now be illustrated with reference to the following examples:-Expandable polystyrene polymer particles were prepared by conventional suspension polymerisation. The particles were pre-expanded using steam to an apparent density of 19 kg/m3 and matured.

### Example 1

250 g of a sodium silicate solution as defined below and 40 g of expandable graphite as defined below were mixed together. The resulting slurry was then mixed with 100 g of the pre-expanded polystyrene beads. After drying the mixture, the coated pre-

### Example 3

Example 1 was repeated with the exception that no sodium silicate solution or expandable graphite was used.

### Example 4

Example 1 was repeated with the exception that no sodium silicate solution was used but only 40 g of expandable graphite was mixed with 100g of pre-expanded polystyrene beads. No expandable graphite coating (sticking to the pre-foam beads) was observed. A deposit of expandable graphite under the pre-foam beads layer was observed.

### Example 5

Example 5 was repeated with the exception that only 250g of sodium silicate solution was used and no expandable graphite was added to the mix.

**Table 1**

| **Example** | **Foam density kg/m3** | **DIN 4102:Part1: B2** | **Observations Foam Burning** | **Burning droplets** | **Burnt height, mm** |
|---|---|---|---|---|---|
| 1 | 37.5 | Pass | No | No | <10* |
| 2 | 37.5 | Pass | No | No | <10* |
| 3 | 18.5 | Fail | Yes | Yes | >150 |
| 4 | 19 | Fail | Yes | Yes | >150 |
| 5 | 21 | Fail | Yes | Yes | >150 |
| | | | | | |

| | | | | | |
|---|---|---|---|---|---|
| * an intumescent layer. | | | | | |

Sodium silicate solution (waterglass): 36-38 %wt sodium silicate in water

Selected physical characteristics of the foams for Examples 1, 2, 3 are set out in Table 2.

**Table 2**

| Example | Foam density, kg/m3 | Bending strength, kPa (EN 12089) | 10% Comp. Strength, kPa (EN 826) | Thermal conductivity, mW/m.K (10 °C) (EN 12667) |
|---|---|---|---|---|
| | | | | |
| 1 (coated) | 37.5 | 260 | 105 | 34.7 |
| 2 (coated) | 37.5 | 260 | 105 | 34.7 |
| 3 (not coated) | 18.5 | 290 | 110 | 33.7 |
| | | | | |

## Claims

1. A composition comprising
(i) expanded or expandable polystyrene beads or particles
(ii) an intumescent, and
(iii) a fire-resistant binder

2. A composition according to claim 1 wherein the expanded or expandable polystyrene is in bead form

3. A composition according to either claim 1 or claim 2 wherein the polystyrene has a weight-average molecular mass in the range 150,000 - 450,000 daltons.

4. A composition according to any one of the preceding claims wherein the intumescent is at least one of melamine, a phosphine, a phosphonate, expandable graphite, expandable glass beads and a nanoclay.

5. A composition according to claim 4 wherein the intumescent is expandable graphite.

6. A composition according to any one of the preceding claims wherein the fire-resistant binder can be an organic material chosen from the list comprising phenol resins, polyurethane dispersions, polyphenols, and phenol-formaldehyde resins.

7. A composition according to any one of claims 1 to 5 wherein the fire-resistant binder is an inorganic material chosen from the list comprising metal, silicates, metal aluminates, metal aluminosilicates and zeolites.

8. A composition according to claim 7 wherein the fire-resistant binder is an aqueous solution of sodium silicate.

9. A method of preparing fire-retardant polystyrene comprising a first step of coating expanded polystryrene beads or particles with a fire-resistant binder and an intumescent and optionally the further steps of
(a) drying the coated beads
(b) transferring the dried beads to a mould, and
(c) compressing and moulding the beads at elevated temperature

10. An article comprising polystyrene foam treated with a fire-resistant binder and an intumescent.
